# EUROPÄISCHE PATENTSCHRIFT

(11) **EP 1 121 605 B1**
(45) Veröffentlichungstag und Bekanntmachung des Hinweises auf die Patenterteilung: **20.08.2003**
(21) Anmeldenummer: 99957893.3
(22) Anmeldetag: 13.10.1999
(51) Int. Cl.: G01S 5/16, H04B 10/105

(54) **VERFAHREN UND VORRICHTUNG ZUR LAGEBESTIMMUNG VON KOMMUNIKATIONS-SATELLITEN**
METHOD AND DEVICE FOR DETERMINING THE POSITION OF COMMUNICATION SATELLITES
PROCEDE ET DISPOSITIF PERMETTANT DE DETERMINER LA POSITION DE SATELLITES DE COMMUNICATION

(30) Priorität: 15.10.1998 DE 19847480
(43) Veröffentlichungstag der Anmeldung: 08.08.2001
(73) Patentinhaber: Astrium GmbH, 81663 München (DE)
(72) Erfinder: FICHTER, Walter, D-81371 München (DE); FLEMMIG, Jörg, D-88048 Friedrichshafen (DE); LANGE, Günter, D-85658 Egmating (DE); SURAUER, Michael, D-83339 Chieming (DE)
(74) Vertreter: Ulrich, Thomas
(86) Internationale Anmeldenummer: DE9903281
(87) Internationale Veröffentlichungsnummer: WO00023817

(56) Entgegenhaltungen:
- EP-A- 0 482 472
- EP-A- 0 880 031
- US-A- 5 109 346
- GLEASON D.M.: "Intersatellite laser ranging experiment for global change sensing and 21st century satellite control" PROCEEDINGS OF THE INTERNATIONAL SOCIETY FOR OPTICAL ENGINEERING, Bd. 2374, 6. - 8. Februar 1995, Seiten 249-260, XP000900028 san jose, ca

## Beschreibung

Die Erfindung betrifft eine Vorrichtung und ein Verfahren zur Lagebestimmung eines oder mehrerer Kommunikations-Satelliten.

Für die Bestimmung und Regelung der Lage, d.h. der Winkellage heutiger Satelliten bestehen für den operationellen Betrieb Genauigkeitsanforderungen in der Größenordnung von 1/100° für alle drei Drehachsen. Um diese Anforderungen zu erfüllen, stehen zum einen bord-autonome Sternsensoren oder Erdsensoren zur Verfügung. Beide Messverfahren zur Bestimmung der Lage von Satelliten haben den Nachteil, dass sie einen großen funktionalen Aufwand erforderlich machen, der insbesondere durch Anforderungen an die Fehler-Erkennung solcher Messverfahren entsteht. Bei den bord-autonomen Sternsensoren ist ein weiterer Nachteil, dass im Bereich der Umlaufbahn von Satelliten eine intensive Strahlung mit schweren Atomkernen besteht, die nur mit großem technischen Aufwand durch eine entsprechende Härtung der hoch-integrierten elektronischen Bauteile verringert werden kann. Dabei bleibt jedoch immer noch eine auf die elektronischen Bauteile wirkende Reststrahlung bestehen, die sich nachteilig auf die Lebensdauer der elektronischen Bauteile auswirkt.

Aus EP 0 482 472 ist eine Vorrichtung und ein Verfahren zur Ausrichtung eines Teleskops eines Satelliten bekannt, das der optischen Nachrichtenübertragung zwischen Satelliten dient. Mit Hilfe einer solchen Vorrichtung oder eines solches Verfahren kann jedoch keine Lagebestimmung eines Satelliten erfolgen.

Der Erfindung liegt die Aufgabe zugrunde, eine Vorrichtung und ein Verfahren zur Lagebestimmung von Kommunikations-Satelliten zu schaffen, das die Genauigkeitsanforderungen für den operationellen Betrieb an die Lagebestimmung erfüllt und mit möglichst geringem technischem Aufwand, insbesondere unter Einsparung mindestens eines genauen Sensors, realisierbar ist.

Die Aufgabe wird mit den Merkmalen der unabhängigen Ansprüche gelöst. Alternative Ausführungsformen sind in den Unteransprüchen angegeben.

Durch die Verwendung der für den operationellen Betrieb von Kommunikations-Satelliten ohnehin notwendigen optischen Datenübertragungs-Systeme für die Lagebestimmung der Satelliten ist für den Erfindungsgegenstand ein relativ geringer technischer Aufwand erforderlich, da nur an Bord des Satelliten bereits verfügbare Daten erforderlich sind und mit verhältnismäßig einfachen Verfahren verarbeitet werden.

Im folgenden wird die Aufgabe anhand der beiliegenden Fig. beschrieben. Es zeigen:
- Fig. 1: eine Konstellation von drei Satelliten auf derselben Umlaufbahn, die miteinander zur erfindungsgemäßen Lagebestimmung im Datenaustausch stehen, und
- Fig. 2: ein Blockschaltbild der zur Einstellung und Regelung einer Achse des optischen Systems erforderlichen Funktionen, mit denen der zum Austausch von Nutzdaten vorgesehene Laserstrahl eines anderen Satelliten eingestellt und empfangen wird und aus denen die Messgrößen ermittelt werden, die das erfindungsgemäße Lagebestimmungssystem neben den Positionsdaten der beteiligten Satelliten als Eingangsgrößen benötigt.

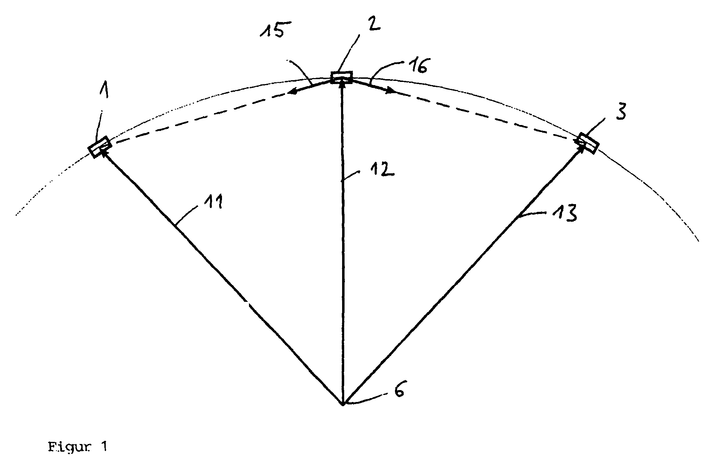

Die Fig. 1 zeigt drei Satelliten 1, 2, 3, wobei das erfindungsgemäße Lagebestimmungssystem ausgehend von dem im Bereich zwischen den Satelliten 1 und 3 gelegenen Satelliten 2 beschrieben wird. Die Satelliten 1, 2, 3 befinden sich auf einer Umlaufbahn 5 um die Erde, deren Erdmittelpunkt symbolisch mit dem Bezugszeichen 6 bezeichnet ist.

Jeder Satellit 1, 2, 3 ist in der Lage, mit einem anderen Satelliten der betrachteten Konstellation Informationen auszutauschen. Dies geschieht vorzugsweise über optische Datenverbindungen mittels Lasertechnik. Jeder Satellit 1, 2, 3 ist in der Lage, seine Position relativ zum Erdmittelpunkt 6 zu bestimmen, beispielsweise seine Position in einem inertialen, geozentrischen Koordinatensystem, dessen Ursprungspunkt im Erdmittelpunkt 6 liegt. Über die optischen Datenverbindungen ist auch jeder Satellit 1, 2, 3 in der Lage, die eigene Position an andere Satelliten weiterzugeben. Umgekehrt besteht die Möglichkeit, dass jeder Satellit 2 die Positionsdaten der jeweils am Datenaustausch beteiligten anderen Satelliten 1, 3 empfängt. Beispielsweise ist der Satellit 2 in der Lage, seine eigene Position, die in der Fig. 1 mit dem Vektor 12 bezeichnet ist, an die Satelliten 1 und 3 weiterzugeben. Weiterhin empfängt der Satellit 2 über die optischen Datenverbindungen, die zwischen den Satelliten 1 und 2 bzw. 2 und 3 bestehen, die Positionsdaten des Satelliten 1, die mit dem Vektor 11 dargestellt sind, und die Positionsdaten des Satelliten 3, die mit dem Lagevektor 13 dargestellt sind.

Die Positionsbestimmung erfolgt vorzugsweise mittels des Global Positioning System (GPS). Zu diesem Zweck hat jeder Satellit 1, 2, 3 einen entsprechenden GPS-Empfänger (nicht dargestellt) und eine zugehörige Datenverarbeitungs-Einrichtung zur Ermittlung der Position aus Sensordaten an Bord. Die Bestimmung der eigenen Position kann jedoch auch mit anderen Verfahren vorgenommen werden, z.B. durch Schätzverfahren mittels Orbit-Propagation. Bei der Positionsbestimmung mittels Orbit-Propagation kann zusätzlich eine Stützung durch Messdaten vorgesehen werden.

Da dem Satelliten 2 die Positionsvektoren 11, 12, 13 bekannt sind, ist dieser in der Lage, die Richtungsvektoren zu den an den optischen Datenverbindungen beteiligten Satelliten, d.h. den Satelliten 1, 3, zu bestimmen. Dies erfolgt aufgrund bekannter mathematischer Operationen; die mit entsprechenden im Satelliten 2 vorgesehenen Datenverarbeitungseinrichtungen ausgeführt werden. Insbesondere errechnet der Satellit 2 aus den Positionsvektoren 11, 12 bzw. 12, 13 den Richtungsvektor 15, der vom Satelliten 2 zum Satelliten 1 hin gerichtet ist, und den Richtungsvektor 16, der vom Satelliten 2 zum Satelliten 3 hin gerichtet ist, wobei die Richtungsvektoren 15, 16 vorzugsweise im inertialen, geozentrischen Koordinatensystem bestimmt werden.

Die Positionsdaten des sendenden Satelliten sind vorzugsweise über die optische Datenverbindung zusammen mit den Nutzdaten übertragen.

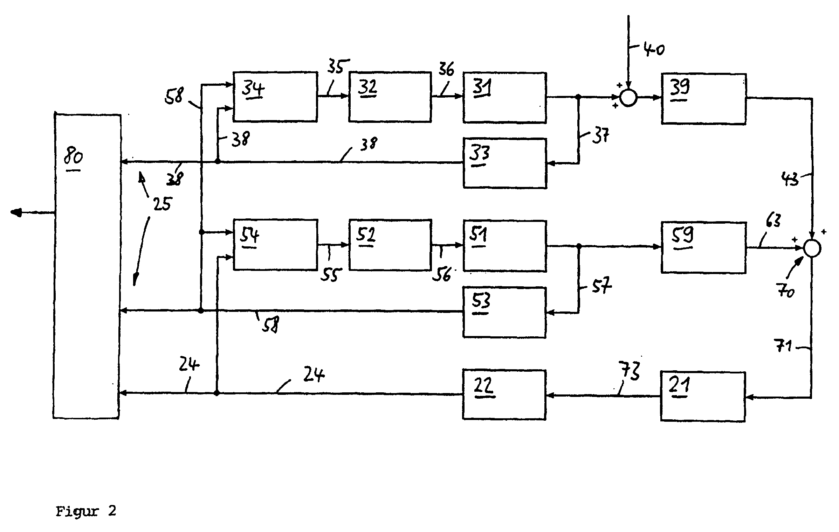

Zur Durchführung von optischen Datenverbindungen haben die an dem Datenaustausch beteiligten Satelliten jeweils zumindest ein optisches System 21, mit dem die von den anderen, am Datenaustausch beteiligten Satelliten gesendeten Laserstrahlen empfangen werden können und Laserstrahlen an beteiligte Satelliten gesendet werden können. Das optische System umfasst insbesondere zumindest ein bewegliches Teleskop und mehrere bewegliche Spiegel sowie feststehende optische Elemente. Der gesendete bzw. empfangene Laserstrahl erfährt mittels des optischen Systems 21 eine optische Abbildung (Fig. 2), die mittels eines optischen Sensors (Optical Tracking Sensor) 22 erfasst oder gemessen wird. Der optische Sensor 22 erfasst insbesondere die Abweichung 24 des empfangenen Laserstrahls von einem Bezugspunkt auf der Abbildungsebene des optischen Systems. Mit Hilfe des optischen Systems, das in vorbestimmter Weise verstellbar ist, kann der empfange Laserstrahl in den Bezugspunkt oder zumindest in einem vorgegebenen Bereich des Bezugspunkts gebracht werden. Aufgrund der gemessenen Abweichung 24 bzw. nach einer Verstellung der beweglichen Teile des optischen Systems noch bestehende Abweichung 24 zusammen mit dem momentanen Verstellwinkel 25 der beweglichen Teile des optischen Systems kann mittels bekannter Verfahren ein Richtungseinheitsvektor vom empfangenden Satelliten 2 zum jeweils sendenden Satelliten 1 bzw. 3 ermittelt werden, wobei dieser Einheitsvektor vorzugsweise zuerst im Koordinatensystem des optischen Systems und dann mittels üblicher mathematischer Transformationen im körperfesten Koordinatensystem des Satelliten 2 bestimmt wird. Die Lagebestimmung erfolgt dann aufgrund bekannter mathematischer Verfahren aufgrund der Verarbeitung zum einen der im inertialen, geozentrischen Koordinatensystem ermittelten Richtungs-Einheitsvektoren, 15 bzw. 16 und zum anderen aus im körperfesten Koordinatensystem des Satelliten 2 aus den gemessenen Abweichungen 24 und der momentanen Verstellwinkel 25 ermittelten Richtungs-Einheitsvektoren im satelliten-festen Koordinatensystem.

Im folgenden wird anhand der Fig. 2 die in einem körperfesten Koordinatensystem des Satelliten vorgenommene Ermittlung der Richtungs-Einheitsvektoren beschrieben, die aus der Abweichung 24 und dem momentanen Verstellwinkel 25 gebildet werden, wobei die Fig. 2 die funktionalen Zusammenhänge der Mechanismen, die bei der Bestimmung dieser Größen beteiligt sind, zur Verdeutlichung nur in einer Achse zeigt. Die Darstellung der Figur 2 kann mit analogen Betrachtungen auf drei Achsen erweitert werden.

Das optische System 21, durch das die Abbildung eines empfangenen Laserstrahls erfolgt, ist mittels eines groben Ausrichtmechanismus (Coarse Pointing Assembly, CPA) 30 und eines feinen Ausrichtmechanismus (Fine Pointing Assembly, FPA) 50 verstellbar. Dabei ist gerätetechnisch vorzugsweise das Teleskop des optischen Systems 21 auf dem CPA gelagert, während sich die beweglichen Spiegel vorzugsweise innerhalb des CPA befinden und auf dem FPA gelagert sind. Der feine Ausrichtmechanismus oder FPA 50 ist also funktional dem groben Ausrichtmechanismus oder CPA 30 nachgeschaltet. Üblicherweise umfasst der grobe Ausrichtmechanismus 30 einen zwei-achsigen Dreh-Mechanismus 31, mit dem die Azimuts- und Elevationswinkel des Teleskops eingestellt werden können, eine Ansteuerelektronik 32 für den zweiachsigen Dreh-Mechanismus 31 und CPA-Sensoren 33 zur Messung der momentanen Azimut- und Elevationswinkel des Dreh-Mechanismus 31. Der Ansteuerelektronik 32 ist ein entsprechender CPA-Regler 34 funktional vorgeschaltet, der Sollsignale 35 für die CPA-Ansteuerelektronik 32 ermittelt. Die CPA-Ansteuerelektronik 32 wiederum gibt entsprechende Stellsignale 36 an den zwei-achsigen CPA-Dreh-Mechanismus 31. Der CPA-Sensor 33, der auch aus einer Gruppe von Sensoren gebildet sein kann, ermittelt aus dem jeweiligen tatsächlichen Drehwinkel 37 des CPA-Dreh-Mechanismus 31 den gemessenen Drehwinkel 38. Durch einen tatsächlichen Drehwinkel 37 des Teleskops erfährt ein empfangener Laserstrahl 40 eine Winkelveränderung, deren Größe von den Drehwinkeln und den optischen Abbildungseigenschaften des Teleskops 39abhängt. Dadurch ergibt sich ein Einfallswinkel 43 des Laserstrahles 40.

Der feine Ausrichtmechanismus 50 umfasst ebenfalls einen zwei-achsigen Dreh-Mechanismus 51, eine vorgeschaltete FPA-Ansteuerelektronik 52 und einen dieser wiederum vorgeschalteten FPA-Regler 54. Der FPA-Regler 54 sendet ein FPA-Sollsignal 55 an die FPA-Ansteuerelektronik 52, die ein FPA-Stellsignal 56 an den FPA-Dreh-Mechanismus 51 sendet. Den momentanen tatsächlichen Drehwinkel 57 des FPA-Dreh-Mechanismus 51 werden durch einen FPA-Sensor 53 oder ein FPA-Sensorsystem 53 gemessen. Der gemessene Drehwinkel bzw. die gemessenen Drehwinkel 58 steht bzw. stehen der weiteren Signal- bzw. Datenverarbeitung zur Verfügung. Durch die mittels des feinen Ausrichtmechanismus 50 vorgenommenen Einstellungen der beweglichen Spiegel ergibt sich eine optische Abbildung 59 und damit eine Winkelveränderung 63, die im Vergleich zur Winkelveränderung 43 in einem kleineren Winkelbereich gelegen ist.

In der Fig. 2 ist anhand der Summationsstelle 70 dargestellt, dass sich die Einfallswinkel-Veränderung 43 aufgrund des groben Ausrichtmechanismus 30 und die Einfallswinkel-Veränderung 63 aufgrund des feinen Ausrichtmechanismus 50 summieren. Aufgrund dieser Winkelveränderungen 43, 63 ergibt sich also ein resultierender optischer Winkel 71, der durch die optische Abbildung mittels des optischen Systems 21 abgebildet wird. Durch die optische Abbildung mittels des optischen Systems 21 ergibt sich eine tatsächliche Abweichung 73· von dem Bezugspunkt der Abbildungsebene der optischen Abbildung des optischen Systems 21. Wie bereits beschrieben, wird durch den optischen Sensor 22 dementsprechend eine gemessene Abweichung 24 ermittelt.

Die vom optischen Sensor 22 gemessene Abweichung 24 wird dem FPA-Regler 54 zugeführt. Weiterhin wird dem FPA-Regler 54 der vom FPA-Sensor 53 gemessene Drehwinkel 58 zugeführt. Der gemessene Drehwinkel 58 wird weiterhin auch dem CPA-Regler 34 zugeführt. Der CPA-Regler 34 ist aufgrund der vom CPA-Sensor 33 gemessene Drehwinkel 38 und den vom FPA-Sensor 53 gemessenen Drehwinkel 58 ist zu jedem Zeitpunkt in der Lage, das Soll-Signal 35 für die CPA-Ansteuerelektronik 32 zu bestimmen. Analog dazu ist der FPA-Regler 54 in der Lage, aus dem gemessenen Drehwinkel 58 und der gemessenen Abweichung 24 das FPA-Sollsignal 55 zu ermitteln.

Die momentanen Verstellwinkel 25, d.h. die gemessenen Drehwinkel 38, 58 und die gemessene Abweichung 24 werden einer Berechnungseinheit 80 zugeführt. In dieser Berechnungseinheit 80 werden diese momentanen Eingangsdaten 24, 25 im körperfesten Koordinatensystem des empfangenden Satelliten 2 zu dem Richtungsvektor umgerechnet, der vom empfangenden Satelliten 2 zu einem der benachbarten Satelliten 1, 3 oder zu einem anderen am Datenaustausch beteiligten Satelliten gerichtet ist.

Die Darstellung der Fig. 2 bezieht sich auf nur eine Verstellachse jeweils des groben Ausrichtmechanismus 30 und des feinen Ausrichtmechanismus 50. Vorzugsweise erfolgt jedoch die Verstellung sowohl des groben Ausrichtmechanismus 30 als auch des feinen Ausrichtmechanismus 50 in je zwei Achsen. Bei jeder Lageänderung des Satelliten 2, d.h. jeder Drehung des Satelliten um eine oder mehrere Raumachsen, wird der zur Durchführung einer optischen Datenverbindung zu anderen Satelliten zu empfangene Laserstrahl 40 mittels der Verstellwinkel 25 in allen vier Verstellachsen über das optische System 21 in einem Bezugspunkt der Abbildungsebene gehalten. Die Erweiterung der in der Fig. 2 gezeigten und auf nur eine Achse bezogenen Darstellung der Fig. 2 auf alle Raumachsen und den vier Verstellachsen erfolgt nach bekannten regelungstechnischen und mathematischen Überlegungen.

Es stehen also in bezug auf zwei im Datenaustausch stehende Satelliten, z.B. in bezug auf die Satelliten 2 und 1 ausgehend von dem Satelliten 2, zwei Vektoren zur Lagebestimmung des Satelliten 2 zur Verfügung: zum einen der Richtungsvektor 15 im inertialen, geozentrischen Koordinatensystem, der sich aus den Positionsbestimmungen und der gegenseitigen Übertragung der Positionsdaten ergibt, und zum anderen der vom empfangendem Satelliten 2 auf den mit diesen im Datenaustausch stehenden anderen Satelliten, z.B. den Satelliten 1, gerichteten Vektor im körperfesten Koordinatensystem des empfangenden Satelliten 2, der in der Berechnungseinheit 80 ermittelt worden ist.

Für die erfindungsgemäße Lagebestimmung sind diese beiden Vektoren in bezug auf jeweils zumindestens zwei Satelliten 1, 3 erforderlich, die mit dem empfangenden Satelliten 2 im Datenaustausch stehen. Dieser Datenaustaustausch wird vorzugsweise mittels optischer Datenverbindungen erreicht, kann jedoch auch in anderer Art erfolgen. Die zur Lagebestimmung auszutauschenden Daten werden vorzugsweise im Rahmen des ohnehin durchzuführenden Nutzdaten-Austausches durchgeführt, so dass durch das erfindungsgemäße Lagebestimmungsverfahren ein nur sehr geringfügiger technischer Mehraufwand entsteht. Mindestens zwei Satelliten 1, 3, die zusammen mit ihren Laserstrahlen und den mit diesen übertragenen Positions-Informationen für die Lagebestimmung des Satelliten 2 benötigt werden, liegen vorzugsweise auf derselben Umlaufbahn wie der empfangende Satellit 2. Sie können jedoch auch auf unterschiedlichen Umlaufbahnen liegen, was für das erfindungsgemäße Verfahren unerheblich ist. Vorzugsweise werden solche Nachbarsatelliten gewählt, die zum Satelliten 2 einen möglichst großen Winkel zwischen den Richtungvektoren 15, 16 besitzen. Vorzugsweise werden auch mehr als zwei sendende und teilweise auf verschiedenen Umlaufbahnen liegende Satelliten verwendet, um die Lage des jeweils empfangenden Satelliten 2 zu bestimmen. Je mehr jeweils sendende Satelliten 1, 3 zur Verfügung stehen, um so mehr kann die Genauigkeit des Verfahrens verbessert werden. Die zu einer Zeit jeweils sendenden Satelliten 1, 3 können zu anderen Zeitpunkten oder auch simultan dazu ein empfangender Satellit sein, um aus den empfangenen Daten die eigene Lage zu ermitteln.

Aus den zumindest vier Richtungsvektoren, also jeweils zwei Richtungsvektoren im inertialen, geozentrischen und jeweils zwei Richtungsvektoren im körperfesten Koordinatensystem des Satelliten, bestimmt der Satellit seine Lage, wozu bekannte mathematische Verfahren herangezogen werden. Die Berechnung der Lage des jeweils empfangenden Satelliten 2 erfolgt dabei vorzugsweise nach folgendem Verfahren: Aus den beiden Richtungsvektoren 15, 16 wird mittels zwéier Kreuzprodukte eine orthogonale 3 mal 3 - Matrix gebildet. Dies wird in gleicher Weise für die zwei Sätze der Richtungsvektoren durchgeführt, die im inertialen, geozentrischen Koordinatensystem und im körperfesten Koordinatensystem des Satelliten gegeben sind. Man erhält somit zwei Matrizen, die dieselbe Lage in den zwei Koordinatensystemen beschreiben. Durch die Multiplikation der Matrix, die aus den Richtungsvektoren im inertialen Koordinatensystem gebildet wurde, mit der Inversen der Matrix, die aus den Richtungsvektoren im körperfesten Koordinatensystem des Satelliten 2 gebildet wurde, ergibt sich die gesuchte Lagematrix des Satelliten 2.

Für den Fall, dass der jeweils empfangende Satellit 2 mit seinen Nachbar-Satelliten 1, 3 kommuniziert, ist die Berechnung der Lage eindeutig, wenn sich die drei Satelliten 1, 2, 3 nicht auf einer Geraden befinden, was für Satelliten einer Konstellation mit der gleichen Umlaufbahn bzw. Orbit-Höhe ausgestoßen werden kann.

Stehen mehr als zwei Nachbar-Satelliten zur Verfügung, ist die Berechnung der Lage des Satelliten überbestimmt. In diesem Fall kann die Genauigkeit der Lagebestimmung durch Verwendung von Berechnungsverfahren für überbestimmte Gleichungsverfahren, insbesondere von Least-Squares-Verfahren, oder Minimal-Varianz-Schätzungen aufgrund der zusätzlichen Messinformation verbessert werden. Weiterhin können auch dynamische Schätzverfahren z.B. aufgrund einer sequentiellen Verarbeitung der Messdaten insbesondere mittels Kalman-Filter eingesetzt werden.

Die Messfehler der Sensoren enthalten hochfrequente Anteile, z.B. eine Frequenz größer als 20 Hz, die z.B. durch Rauschen oder Störungen durch die zur Stabilisierung des Satelliten verwendeten Drallräder entstehen. Für die Lagebestimmung des Satelliten wird der Lage-Messwert mit deutlich kleinerer Frequenz benötigt. Deshalb können hochfrequente Anteile im Lage-Messwert durch ein entsprechendes Filter, insbesondere ein Tiefpassfilter oder ein Kalman-Filter, herausgefiltert werden, was zu einer Verbesserung des Lage-Messwertes führt. Außerdem können mechanische Dämpfungsmaßnahmen oder/und weitere Vorkehrungen, wie Notch-Filter oder ein Aktivkontrollsystem vorgesehen werden.

Ausrichtfehler bei der Integration des Satelliten und thermische Verformungen führen zu statischen bzw. sich nur langsam ändernden Fehlern in der Ausrichtung der Nutzlast. Die Ausrichtung der Nutzlast kann dadurch verbessert werden, dass ein relativer Lage-Messsensor zwischen den optischen, Kommunikations-Terminals und der Nutzlast (z.B. den Antennen) angebracht wird. Die gemessene relative Lage wird dann dazu verwendet, um die Ausrichtung der Nutzlast entsprechend zu korrigieren.

Das erfindungsgemäße Verfahren umfasst also die Schritte: Berechnung von zwei Vektoren im inertialen, geozentrischen Koordinatensystem in Richtung zumindest zweier Nachbar-Satelliten, basierend auf der Messung der Positionen, beispielsweise durch GPS, und Übertragung der Positionsdaten mittels des bereits bestehenden optischen Datenaustausches; Berechnung von zwei Vektoren im körperfesten Koordinatensystem des empfangenden Satelliten, die der Richtung des einfallenden Laserstrahles von den mit diesen im Austausch stehenden Satelliten, den z.B. den beiden Nachbarsatelliten, entsprechen, basierend auf den Sensorinformationen des optischen Systems, d.h. der Winkelstellung des Grobausrichtmechanismus 30, der Winkelstellung des Feinausrichtmechanismus 50, der gemessenen Abweichung 24 des optischen Sensors 22; Berechnung der Satellitenlage aus zumindest zwei Sätzen von jeweils zwei Richtungs-Einheitsvektoren, die jeweils im inertialen, geozentrischen Koordinatensystem und im körperfesten Koordinatensystem des Satelliten ermittelt worden sind; Filterung der hochfrequenten Anteile der Messwert-Störungen; gegebenenfalls Verbesserung der Bestimmung der Lage der Nutzlast durch relative Lagemessung zwischen Nutzlast und optischen Kommunikations-Terminals.

## Patentansprüche

1. Vorrichtung zur Lagebestimmung an Bord eines Satelliten (2),
mit einer Datenübertragungseinrichtung zur Durchführung eines optischen Datenaustausches mit zumindest zwei weiteren Satelliten (1, 3),
mit einer Einrichtung zur Ermittlung der eigenen Position,
mit einer Einrichtung zur Ermittlung der Richtungsvektoren in einem intertialen, geozentrischen Koordinatensystem aus der eigenen Position und aus mittels der Datenübertragungseinrichtung übertragenen Positionsdaten von zumindest zwei weiteren Satelliten (1, 3),
mit einer Einrichtung zur Bestimmung des jeweils auf die zumindest zwei Satelliten (1, 3) gerichteten Richtungsvektors in einem körperfesten Koordinatensystem des Satelliten, umfassend ein optisches System (21), welches durch einen groben Ausrichtemechanismus (30) und einen feinen Ausrichtemechanismus (50) verstellbar ist, und mit einer Einrichtung zur Lagebestimmung aus den ermittelten inertialen und körperfesten Richtungsvektoren.

2. Vorrichtung zur Lagebestimmung nach dem Anspruch 1, **dadurch gekennzeichnet, dass** die Einrichtung zur Bestimmung des Richtungsvektors in einem körperfesten Koordinatensystem des Satelliten umfasst:
ein optisches System (21) zur optischen Abbildung der von den zumindest zwei Satelliten (1, 3) empfangenen Laserstrahlen (40), wobei der jeweils empfangene Laserstrahl (40) mittels Verstellung (38, 58) eines das optische System (21) verstellenden Ausrichtmechanismus (30, 50) auf einer Abbildungsebene im Bereich eines Bezugspunktes bei Lageänderung des empfangenen Satelliten (2) gehalten werden kann,
eine Messvorrichtung zur Messung der Verstellwinkel (25) des Ausrichtmechanismus (30, 50), einem optischen Sensor (22) zur Messung der Abweichung des empfangenen Laserstrahles (40) von dem Bezugspunkt auf der Abbildungsebene,
eine Berechnungseinheit (80), die aus der Abweichung (24) und den Verstellwinkeln (25) jeweils einen Richtungsvektor im körperfesten Koordinatensystem des empfangenden Satelliten (2) von diesem zu zumindest zwei anderen mit diesen im optischen Datenaustausch stehenden Satelliten (1, 3) ermittelt.

3. Vorrichtung zur Lagebestimmung nach einem der voranstehenden Ansprüche, **dadurch gekennzeichnet, dass** die Positionsbestimmung der Satelliten mittels GPS erfolgt.

4. Vorrichtung zur Lagebestimmung eines Satelliten nach einem der voranstehenden Ansprüche, **dadurch gekennzeichnet, dass** die Positionsbestimmung mittels Orbit-Propagation erfolgt.

5. Einrichtung zur Lagebestimmung eines Satelliten, nach einem der voranstehenden Ansprüche, **dadurch gekennzeichnet, dass** der empfangende Satellit (2) die Laserstrahlen von mehr als zwei mit diesen im Datenaustausch stehenden Satelliten empfängt.

6. Einrichtung zur Bestimmung der Satellitenlage, nach einem der voranstehenden Ansprüche, **dadurch gekennzeichnet, dass** bei der Bestimmung der Richtungsvektoren Berechnungsverfahren für überbestimmte Gleichungssysteme verwendet werden.

7. Einrichtung zur Bestimmung der Satellitenlage nach dem Anspruch 6, **dadurch gekennzeichnet, dass** Least Square - Filter verwendet werden.

8. Einrichtung zur Bestimmung der Satellitenlage nach einem der voranstehenden Ansprüche, **dadurch gekennzeichnet, dass** bei der Bestimmung der Richtungsvektoren eine sequentielle Verarbeitung der Messdaten erfolgt.

9. Einrichtung zur Bestimmung der Satellitenlage nach dem Anspruch 8, **dadurch gekennzeichnet, dass** Kalmann-Filter verwendet werden.

10. Einrichtung zur Bestimmung der Satellitenlage, nach einem der voranstehenden Ansprüche, **dadurch gekennzeichnet, dass** zusätzlich mechanische Dämpfungsmaßnahmen und dynamische Filter vorgesehen sind, um Störungen durch Vibrationen der Struktur des Satelliten (2) zu reduzieren.

11. Einrichtung zur Bestimmung der Satellitenlage, nach einem der voranstehenden Ansprüche, **dadurch gekennzeichnet, dass** die Lageinformation für die Nutzlast des Satelliten durch einen relativen Lagesensor zwischen dem optischen Kommunikations-Terminal und der Nutzlast verbessert wird.

12. Verfahren zur Lagebestimmung eines Satelliten (2), mit den folgenden Schritten:
Berechnung eines Richtungsvektors im inertialen, geozentrischen Koordinatensystem jeweils in Richtung zu zumindest zwei weiteren mit dem empfangenden Satelliten (2) in Datenaustausch stehenden Satelliten (1, 3) basierend auf der Messung der Positionen der am Datenaustausch beteiligten Satelliten (1, 2, 3) und Übertragung der Positionsdaten mittels optischer Kommunikation.
Grobausrichtung und anschließende Feinausrichtung einer optischen Einrichtung (21).
Berechnung jeweils eines Richtungsvektors im körperfesten Koordinatensystem des empfangenden Satelliten (2), der von diesem zu zumindest zwei weiteren mit diesem im Datenaustausch stehenden Satelliten (1, 3) gerichtet ist, basierend auf den Sensorinformationen über die Einstellung der optischen Einrichtung (25) zum Empfang des Laserstrahles (40) und der Abweichungen (24) des optischen Laserstrahles von einem Bezugspunkt in der Abbildungsebene,
Berechnung der Satellitenlage aus zumindest zwei Paaren von Richtungsvektoren im inertialen, geozentrischen Koordinatensystem und dem körperfesten Koordinatensystem des Satelliten (2).

## Claims

1. Position-determining apparatus on board a satellite (2),
having a data transmission device for performing an optical data exchange with at least two further satellites (1, 3),
having a device for determining its own position,
having a device for determining the direction vectors in an inertial, geocentric coordinate system from its own position and from position data transmitted by means of the data transmission device of at least two further satellites (1, 3),
having a device for determining the direction vector directed at each of the at least two satellites (1, 3) in a body-fixed coordinate system of the satellite, comprising an optical system (21) that can be adjusted by a coarse alignment mechanism (30) and a fine alignment mechanism (50) and that has a device for determining position from the inertial and body-fixed direction vectors found.

2. Position-determining apparatus according to Claim 1, **characterized in that** the device for determining the direction vector in a body-fixed coordinate system of the satellite comprises:
an optical system (21) for the optical imaging of the laser beams (40) received by the at least two satellites (1, 3), wherein the respective received laser beam (40) can be held by means of adjustment (38, 58) of an alignment mechanism (30, 50) that adjusts the optical system (21) on an imaging plane in the vicinity of a reference point in the event of a positional change of the receiving satellite (2),
a measurement device for measuring the angle of adjustment (25) of the alignment mechanism (30, 50), an optical sensor (22) for measuring the deviation of the received laser beam (40) from the reference point on the imaging plane,
a calculation device (80) that determines, from the deviation (24) and the angles of adjustment (25), a respective direction vector in the body-fixed coordinate system of the receiving satellite (2) of the latter to at least two other satellites (1, 3) in optical data exchange with said receiving satellite.

3. Position-determining apparatus according to any one of the preceding claims, **characterized in that** the position of the satellites is determined by means of GPS.

4. Satellite position-determining apparatus according to any one of the preceding claims, **characterized in that** the position is determined by means of orbit propagation.

5. Satellite position-determining apparatus according to any one of the preceding claims, **characterized in that** the receiving satellite (2) receives the laser beams from more than two satellites in data exchange with the latter.

6. Satellite position-determining apparatus according to any one of the preceding claims, **characterized in that** calculation methods for overdetermined equation systems are used in the determination of the direction vectors.

7. Satellite position-determining apparatus according to Claim 6, **characterized in that** least-square filters are used.

8. Satellite position-determining apparatus according to any one of the preceding claims, **characterized in that** a sequential processing of the measurement data takes place in the determination of the direction vectors.

9. Satellite position-determining apparatus according to Claim 8, **characterized in that** Kalmann filters are used.

10. Satellite position-determining apparatus according to any one of the preceding claims, **characterized in that** mechanical damping measures and dynamic filters are additionally provided to reduce interferences due to vibrations in the structure of the satellite (2).

11. Satellite position-determining apparatus according to any one of the preceding claims, **characterized in that** the position information for the useful load of the satellite is improved by a relative position sensor between the optical communication terminal and the useful load.

12. Method of determining the position of a satellite (2), comprising the following steps:
calculation of a direction vector in the inertial, geocentric coordinate system in the direction of each of at least two further satellites (1, 3) in data exchange with the receiving satellite (2), based on measuring the positions of the satellites (1, 2, 3) participating in the data exchange and transmission of the position data by means of optical communication, coarse alignment and subsequent fine alignment of an optical device (21),
calculation of a respective direction vector in the body-fixed coordinate system of the receiving satellite (2) that is directed by the latter at at least two further satellites (1, 3) in data exchange with the latter, based on the sensor information items relating to the adjustment of the optical device (25) for receiving the laser beam (40) and the deviations (24) of the optical laser beam from a reference point in the imaging plane,
calculation of the satellite position from at least two pairs of direction vectors in the inertial, geocentric coordinate system and the body-fixed coordinate system of the satellite (2).

## Revendications

1. Dispositif pour déterminer la position à bord d'un satellite (2). comprenant
- une installation de transmission de données pour entretenir un échange de données optiques avec au moins deux autres satellites (1, 3),
- une installation pour déterminer sa propre position,
- une installation pour déterminer les vecteurs de direction dans un système de coordonnées inertiel géocentrique à partir de sa propre position et de données de position d'au moins deux autres satellites (1, 3) transmises à l'aide de l'installation de transmission de données,
- une installation pour déterminer le vecteur de direction respectivement dirigé vers au moins deux satellites (1, 3) dans un système de coordonnées intrinsèque du satellite, comprenant un système optique (21) réglable par un mécanisme d'orientation grossière (30) et un mécanisme d'orientation fine (50), et comprenant une installation pour déterminer la position à partir des vecteurs de direction inertiels et intrinsèques déterminés.

2. Dispositif pour déterminer la position selon la revendication 1,
**caractérisé en ce que**
- l'installation pour déterminer le vecteur de direction dans un système de coordonnées intrinsèque du satellite comprend :
- un système optique (21) pour la représentation optique des faisceaux laser (40) reçus par au moins deux satellites (1, 3), le faisceau laser (40) respectivement reçu pouvant être maintenu par ajustement (38, 58) d'un mécanisme d'orientation (30, 50) ajustant le système optique (21) sur un plan de représentation dans la zone d'un point de référence lorsque le satellite récepteur (2) change de position.
- un dispositif de mesure pour mesurer les angles d'ajustement (25) du mécanisme d'ajustement (30, 50), un capteur optique (22) pour mesurer l'écart du faisceau laser reçu (40) par rapport au point de référence sur le plan de représentation,
- une unité de calcul (80) déterminant à partir de l'écart (24) et des angles d'ajustement (25) respectivement un vecteur de direction dans le système de coordonnées intrinsèque du satellite récepteur (2) par rapport à au moins deux autres satellites (1, 3) entretenant un échange de données optique.

3. Dispositif pour déterminer la position selon l'une quelconque des revendications précédentes,
**caractérisé en ce que**
la détermination de position des satellites est réalisée par GPS.

4. Dispositif pour déterminer la position d'un satellite selon l'une quelconque des revendications précédentes,
**caractérisé en ce que**
la détermination de position est réalisée par propagation orbitale.

5. Installation pour déterminer la position d'un satellite selon l'une quelconque des revendications précédentes,
**caractérisée en ce que**
le satellite récepteur (2) reçoit les falsceaux laser de plus de deux satellites entretenant un échange de données avec celui-ci.

6. Installation pour déterminer la position de satellite selon l'une quelconque des revendications précédentes,
**caractérisée en ce que**
lors de la détermination des vecteurs de direction on utilise des méthodes de calcul pour des systèmes d'équations supérieurs.

7. Installation pour déterminer la position de satellite selon la revendication 6,
**caractérisée en ce que**
l'on utilise des filtres Least Square.

8. Installation pour déterminer la position de satellite selon l'une quelconque des revendications précédentes,
**caractérisée en ce que**
pour la détermination des vecteurs de direction on procède à un traitement séquentiel des données mesurées.

9. Installation pour déterminer la position de satellite selon la revendication 8,
**caractérisée en ce que**
l'on utilise des filtres de Kalmann.

10. Installation pour déterminer la position d'un satellite selon l'une quelconque des revendications précédentes,
**caractérisée en ce qu'**
en supplément des mesures d'amortissement mécaniques et des filtres dynamiques sont prévus pour réduire les perturbations suite à des vibrations de la structure du satellite (2).

11. Installation pour déterminer la position d'un satellite selon l'une quelconque des revendications précédentes,
**caractérisée en ce que**
l'information de position concernant la charge utile du satellite est améliorée par un capteur de position relative disposé entre le terminal de communication optique et la charge utile.

12. Procédé pour déterminer la position d'un satellite (2) comprenant les étapes suivantes :
- calcul d'un vecteur de direction dans le système de coordonnées inertiel géocentrique, respectivement dans la direction d'au moins deux autres satellites (1, 3) entretenant un échange de données avec le satellite récepteur (2), à base de la mesure des positions des satellites (1, 2, 3) participant à l'échange de données, et transmission des données de position à l'aide d'une communication optique,
- ajustement grossier puis ajustement fin d'une installation optique (21).
- calcul respectivement d'un vecteur de direction dans le système de coordonnées intrinsèque du satellite récepteur (2), qui est dirigé par celui-ci vers au moins deux autres satellites (1, 3) entretenant un échange de données avec celui-ci, calcul basé sur les informations de capteur concernant le réglage de l'installation optique (25) pour recevoir le faisceau laser (40) et des écarts (24) du faisceau laser optique par rapport à un point de référence dans le plan de représentation,
- calcul de la position de satellite à partir d'au moins deux paires de vecteurs de direction dans le système de coordonnées inertiel géocentrique et le système de coordonnées intrinsèque du satellite (2).
